# EUROPÄISCHE PATENTSCHRIFT

(11) **EP 1 431 589 B1**
(45) Veröffentlichungstag und Bekanntmachung des Hinweises auf die Patenterteilung: **02.11.2005**
(21) Anmeldenummer: 03028045.7
(22) Anmeldetag: 08.12.2003
(51) Int. Cl.: F16B 5/06, F16B 5/12

(54) **Aufschiebe-Feder-Halteklammer**
fixing clip
agrafe

(30) Priorität: 16.12.2002 DE 20219444 U
(43) Veröffentlichungstag der Anmeldung: 23.06.2004
(73) Patentinhaber: Schwarz Verbindungs-Systeme GmbH, 75382 Althengstett (DE)
(72) Erfinder: Schwarz, Helmut, 71263 Weil der Stadt (DE); Homner, Bernhard, 75365 Calw (DE)
(74) Vertreter: Blutke, Klaus Wilhelm

(56) Entgegenhaltungen:
- FR-A- 1 208 110
- US-A- 3 376 612
- US-A- 4 406 505

## Beschreibung

Die Erfindung betrifft eine am Randbereich eines Bauteils o.ä.anbringbare Aufschiebe-Feder-Halteklammer, entsprechend der Merkmale aus dem Oberbegriff des Anspruchs 1 (US 3 376 612 A).

Es sind eine Vielzahl von Klammern und ähnlichen Anordnungen allseits bekannt, welche dazu dienen mit anderen Gegenständen verbunden zu werden:
z.B. Wäscheklammern zur Verbindung eines Wäschestückes mit einer Wäscheleine, Klemmen zum Zusammenhalten von Papierbögen oder U-förmige Feder-Klammern, die dazu dienen, eine Tischdecke am Rand einer Tischplatte festzuhalten.

Die Funktion dieser Klammern ist unterschiedlich; viele Klammern dienen nur dazu, etwas zusammenzuhalten; andere, einen Gegenstand (z.B. die Tischdecke) an einem anderen Gegenstand ( hier der Tischplatte) zu fixieren etc.

Es ist Aufgabe der Erfindung, eine Aufschiebe-Feder-Halteklammer vorzusehen, welche am Rand eines Bauteils in wählbaren Rastpositionen anbringbar ist und welche gesichert und lösbar mit dem Bauteil verbunden werden kann.

Es ist weiterhin Aufgabe der Erfindung, vorgenannte Aufschieb-Feder-Halteklammer so auszugestalten oder zu bestücken, daß sie zugleich ein erstes Verbindungsstück einer (aus zwei Verbindungsstücken bestehenden) Verbindungsanordnung zur Verbindung zweier Bauteile bildet.

Es sind eine Vielzahl von lösbaren Verbindungsanordnungen für zwei Bauteile bekannt, welche sich nicht nur im Verbindungsprinzip unterscheiden, sondern auch in der Befestigung der Verbindungsstücke an den Bauteilen.

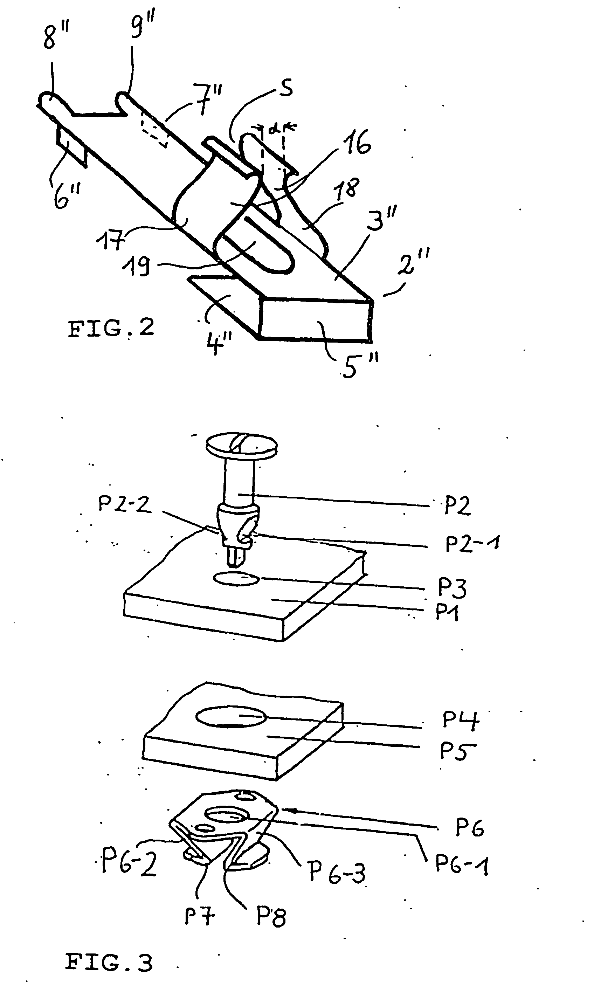

In dem deutschen Gebrauchsmuster G 813 695 8.1 ist eine Vorrichtung zum lösbaren Verbinden zweier mit fluchtenden Öffnungen versehener Bauteile beschrieben. Diese Vorrichtung (FIG. 3) besteht aus einem mit dem ersten Bauteil P1 verbundenen Haltebolzen P2, der durch die Öffnung P3 des ersten P1 und die Öffnung P4 des zweiten Bauteils P5 hindurchragt.Am Schaftende weist dieser Haltebolzen P2 zwei seitliche Einkerbungen P2-1 und P2-2 auf. Desweiteren umfaßt diese Vorrichtung eine mit dem zweiten Bauteil P5 verbundene Haltefeder-Anordnung P6 mit einer zentralen Öffnung P6-1 für den Haltebolzen P2.
Diese Haltefeder-Anordnung P6 weist zwei Federarm-Schrägen P6-2 und P6-3 auf, deren Enden P7 und P8 zum Eingriff in die Kerben P2-2 und P2-1 des Haltebolzens P2 ausgebildet sind.
Bei dieser Verbindungsanordnung ist die Halte-Blattfeder-Anordnung unterhalb des zweiten Bauteils fest angebracht.
Eine gegenseitige Verschiebung des ersten und zweiten Bauteils in einer Richtung über den Toleranzbereich der Bohrungen P3 und P5 ist nicht möglich.

Im deutschen Gebrauchsmuster 200 20 734.2 ist deshalb eine Verbindungsanordnung zum lösbaren Verbinden zweier Bauteile unter Verwendung der vorgenannten Halte-Blattfeder-Anordnung beschrieben, welche in einem bestimmten Bereich eine gegenseitige Verschiebung der Bauteile in einer Richtung zuläßt.

Auch hier ist die Haltefederanordnung über einem Halter fest mit dem einen Bauteil verbunden.

Bestimmte Bauteilverbindungen erfordern, daß ein Verbindungsstück ( einer aus zwei Verbindungsstücken bestehenden Verbindungsanordnung) zum Verbinden zweier Bauteile) am Rande eines Bauteils anzuordnen ist. Hierfür bietet sich die erfindungsgemäße Aufschiebe-Feder-Halteklammer 2 an, wobei diese zugleich Träger des Verbindungsstückes ist.

Die erfindungsgemäße Aufschiebe-Feder-Halteklammer im Anspruch 1 definiert. Sie ist leicht anzubringen durch einfaches Aufschieben auf das Bauteil und Ausrichten auf eine der Rastpositionen . Zum Entfernen der Halteklammer vom Bauteil muß nur die Verriegelung ( z.B. Nase 12 aus der Aussparung 13) gelöst werden.

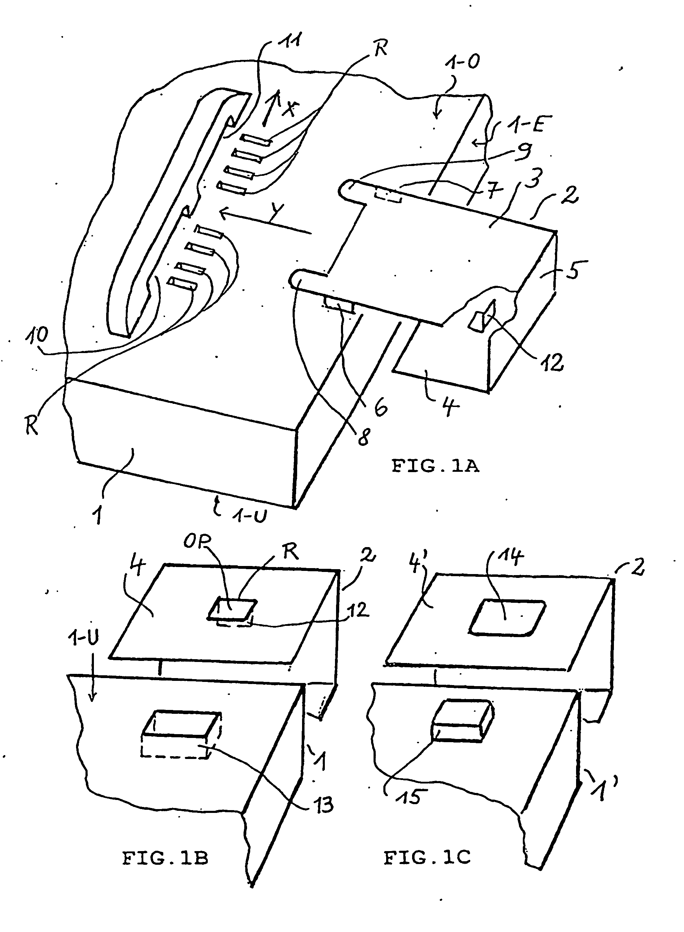

Ausführungsbeispiele der Erfindung sind in den Zeichnungen dargestellt und werden im folgenden näher beschrieben. Es zeigen:
FIG. 1A
   eine schematisch- perspektivische Darstellung eines Bauteils mit der erfindungsgemäßen Aufschiebe-Feder-Halteklammer in Schrägansicht auf Oberseite und Randkante des Bauteils;
FIG. 1B
   eine auszugsweise schematisch- perspektivische Darstellung eines Bauteils (in Schrägansicht auf die Unterseite ) mit der erfindungsgemäßen Aufschieb-Feder-Halteklammer gemäß FIG. 1;
FIG. 1C
   eine auszugsweise schematisch- perspektivische Darstellung eines Bauteils (in Schrägansicht auf die Unterseite ) mit einer anderen Ausführung der erfindungsgemäßen Aufschiebe-Feder-Halteklammer.
FIG. 2
   eine schematisch- perspektivische Darstellung der erfindungsgemäßen Aufschiebe-Feder-Halteklammer mit einer Halte-Blattfeder-Anordnung als erstes Verbindungsstück (für eine aus zwei Verbindungsstücken bestehende Verbindungsanordnung für zwei Bauteile).
FIG.3
   eine perspektivische Explosions-Darstellung einer aus einem drehbaren Haltebolzen und einer Halte-Blattfeder bestehenden Anordnung nach dem Stand der Technik ( Deutsches Gebrauchsmuster G 813 6958.1) zum Verbinden zweier Bauteile.

Die FIG. 1 zeigt
eine schematisch- perspektivische Darstellung eines Bauteils 1 mit der erfindungsgemäßen Aufschiebe-Feder-Halteklammer 2. Die Aufschiebe-Feder-Halteklammer 2 ist auf den Randbereich des Bauteils 1 in Y-Richtung aufschiebbar.
Die Oberseite des Bauteils ist mit 1-O, die Unterseite mit 1-U und dessen Randkante mit 1-E bezeichnet.
Die Aufschiebe-Feder-Halteklammer 2 hat ein U-förmig-ähnliches Profil, in der Ausführungsform gemäß FIG. 1 mit ungleich langen Schenkeln. Ausführungsformen mit gleich langen Schenkeln sind ebenfalls denkbar.
Ein Schenkel 3 der Aufschiebe-Feder-Halteklammer 2 ist auf der Bauteil-Oberseite 1-O,
der andere Schenkel 4 auf der Bauteil-Unterseite 1-U und die Schenkelbasis 5 der Aufschieb-Feder-Halteklammer 2 an der Randkante 1-E des Bauteils 1 anordnungsbar.
Der Schenkel 3 der Aufschiebe-Feder-Halteklammer 2 weist zwei dem Bauteil 1 zugewandte erste Nasen 6, 7 auf, welche in eine der Rastpositionen R des Bauteils 1 eingreifbar sind.
Diese Rastpositionen sind als kleine nebeneinanderliegende rillenförmige Vertiefungen im Bauteil ausgeführt.
Der Schenkel 3 weist zwei in Y-Richtung weisenden Vorsprunge 8, 9 auf, welche jeweils in eine erste Aussparung 10 bzw.11 des Bauteils 1 in einer Weise aufnehmbar sind, daß bei vollendeter Montage die Aufschiebe-Feder-Halteklammer 2 von der Bauteil-Oberseite (1-O) nicht abgehoben werden kann.

Der andere Schenkel 4 der Aufschieb-Feder-Halteklammer 2 weist eine dem Bauteil 1 zugewandte zweite Nase 12 auf, welche in einer zweiten Aussparung 13 auf der Unterseite des Bauteils 1 (formschlüssig) eingreifbar ist zur Verhinderung des Lösens der Aufschiebe-Feder-Halteklammer 2 vom Bauteil 1.
FIG. 1B zeigt
   eine auszugsweise schematisch- perspektivische Darstellung des Bauteil 1 in Schrägansicht auf die Unterseite 1-U mit der erfindungsgemäßen Aufschiebe-Feder-Halteklammer 2 gemäß FIG. 1. Aus dieser Abbildung ist zu erkennen, daß im Schenkel 4 die Nase 12 ( gestrichelt) am oberen Rand R der Öffnung OP ansetzt, aus der sie herausgedrückt( ausgeklingt) wurde.
FIG. 1C zeigt
   eine auszugsweise schematisch- perspektivische Darstellung des Bauteils 1 in Schrägansicht auf die Unterseite mit einer anderen Ausführungsform der erfindungsgemäßen Aufschiebe-Feder-Halteklammer. In dieser Ausführungsform erfolgt die Verriegelung der Halteklammer 2' mit dem Bauteil 1' (nicht mittels der Nase 12, welche in die Aussparung 13 eingreift -wie aus FIG. 1B ersichtlich-), sondern mittels eines Vorsprungs 15 am Bauteil 1', welcher in eine Öffnung 14 des Schenkels 4' der Aufschieb-Feder-Halteklammer 2' eingreift und so ein Lösen der Aufschieb-Feder-Halteklammer 2' vom Bauteil 1' verhindert.
FIG. 2 zeigt
   eine schematisch- perspektivische Darstellung der erfindungsgemäßen Aufschiebe-Feder-Halteklammer 2" mit einer Halte-Blattfeder-Anordnung 16 als erstes Verbindungsstück einer aus zwei Verbindungsstücken bestehenden Verbindungsanordnung für zwei Bauteile.

Die Haltefederanordnung 16 entspricht in ihrer prinzipiellen Funktion der in FIG.3 gezeigten Haltefederanordnung ( zur Verbindung mit einem entsprechenden Haltebolzen).
Die beiden sich gegenüberstehenden voneinander beabstandeten (d) freien Blattfederenden 17,18 dienen dem Eingriff in die Haltekerben des Halte-Bolzens (nur in FIG. 3 dargestellt), welcher mit einem zweiten Bauteil verbindbar ist.

Das erste Bauteil und das Aufschiebe-Halte-Element (2") weisen ein Langloch 19 als Durchtrittsöffnung für den gedachten Haltebolzen ( nicht dargestellt) auf, welcher in diesem Langloch und in dem zwischen den Halteferdearmenden gebildeten Spalt S verschiebbar ist. Die anderen Bezugszeichen in FIG. 2 entsprechen denen von FIG. 1A; sie sind zusätzlich mit '' gekennzeichnet.

Die Aufschiebe-Feder-Halteklammer 2 `' und die Halte-Blattfeder-Anordnung 16 sind vorzugsweise aus Federstahl und einteilig ausgeführt.

Es sind jedoch auch zweiteilige Ausführungen denkbar; insbesondere dann, wenn die erfindungsgemäße Aufschiebe-Feder-Halteklammer mit einem anderen Verbindungsstück ( als die in FIG. 2 gezeigte Halte-Blattfeder-Anordnung 16) für eine aus zwei Verbindungsstücken bestehenden Verbindungsanordnung zum Verbinden zweier Bauteile bestückt werden soll.

Als solche Verbindungsstücke kommen z.B. auch solche in Betracht, wie sie z.B. im Deutschen Gerbrauchsmuster 20 218 301.7 angegeben sind:
als besonders gestaltete Blattfederanordnung mit vom Außenrand eines Basisteils ausgehenden umgebogenen, sich zum freien Ende hin verjüngenden Federarmen, welche über dem Basisteil wie Teile eines gedachten Kegeldaches oder einer gedachten Pyramide mit offener Spitze für den Bolzendurchtritt angeordnet sind oder
als besonders gestaltetes Gewindeverbindungsstück.

## Patentansprüche

1. Anordnung mit einer auf den Randbereich eines Bauteils mit einer Ober-(1-O), einer Unterseite (1-U) und einer Randkante (1-E) anbringbaren Aufschiebe-Feder-Halteklammer mit einem U-förmigähnlichen Profil,
wobei
ein Schenkel der Aufschiebe-Feder-Halteklammer auf der Bauteil-Oberseite (1-O),
der andere Schenkel auf der Bauteil-Unterseite (1-U) und die Schenkelbasis (5) der Aufschiebe-Feder-Halteklammer an der Randkante (1-E) des Bauteils anordnungsbar ist,
wobei der eine Schenkel (3) (2) mindestens eine dem Bauteil (1) zugewandte erste Nase ( 6, 7 ) aufweist, welche in einer Rastposition (R) des Bauteils (1) eingreifbar ist und mindestens einen Vorsprung (8, 9) aufweist, und
wobei der andere Schenkel (4) mit dem Bauteil (1) über eine lösbare Verbindung zur Verhinderung des Lösens der Aufschiebe-Feder-Halteklammer (2) vom Bauteil (1) verbunden ist,
**dadurch gekennzeichnet,**
**daß** auf dem Bauteil (1) mehrere nebeneinanderliegende Rastpositionen (R) ausgebildet sind und daß die Aufschiebe-Feder-Halteklammer (2) mit ihrer ersten Nase (6,7) in einer aus diesen auswählbaren Rastposition auf dem Bauteil (1) anbringbar ist.

2. Anordnung nach Anspruch 1,
**dadurch gekennzeichnet, daß**
zur lösbaren Verbindung des anderen Schenkels (4) mit dem Bauteil (1) dieser Schenkel (4) eine dem Bauteil zugewandte zweite Nase (12) aufweist, welche in einer zweiten Aussparung (13) des Bauteils (1) eingreifbar ist
oder
daß der andere Schenkel (4') der Aufschiebe- Feder-Halteklammer (2') eine Öffnung (14) aufweist, in welche ein Vorsprung (15) des Bauteils aufnehmbar ist.

3. Anordnung nach Anspruch 1 oder 2,
**dadurch gekennzeichnet, daß**
der Vorsprung (8,9) in einer ersten Aussparung (10,11) des Bauteils (1) aufnehmbar ist zur Verhinderung des Abhebens der Aufschiebe-Feder-Halteklammer (2) von der Bauteil-Oberseite (1-O).

4. Anordnung nach einem der Ansprüche 1 oder 2,
**dadurch gekennzeichnet,daß**
die Aufschiebe-Feder-Halteklammer mit einem ersten Verbindungsstück einer (aus zwei Verbindungsstücken bestehenden) Verbindungsanordnung zur Verbindung zweier Bauteile verbunden ist oder als ein solches erstes Verbindungsstück ausgebildet ist.

5. Anordnung nach Anspruch 4,
**dadurch gekennzeichnet, daß**
das erste Verbindungsstück (16) eine an sich bekannte Halte-Blattfeder-Anordnung ist mit zwei sich gegenüberstehenden voneinander beabstandeten (d) freien Blattfederarmenden (17,18) zum Eingriff in mindestens eine Haltekerbe eines gedachten Halte-Bolzens, welcher mit einem zweiten Bauteil verbindbar ist.

6. Anordnung nach Anspruch 5 ,
**dadurch gekennzeichnet, daß**
in an sich bekannterweise zwischen den Blattfederarmenden (17,18) ein offener Spalt (S) ausgebildet ist, in welchem der gedachte Haltebolzen verschiebbar ist.

7. Anordnung nach Anspruch 4,
**dadurch gekennzeichnet, daß**
das erste Bauteil und die Aufschiebe-Feder-Halteklammer (2") ein Langloch (19) als Durchtrittsöffnung für den gedachten Haltebolzen aufweisen, in welchem dieser verschiebbar ist.

8. Anordnung nach einem der Ansprüche 4 bis 7,
**dadurch gekennzeichnet,**
**daß** die Aufschiebe-Feder-Halteklammer (2") und die Halte-Blattfeder-Anordnung (16) einteilig ist.

9. Anordnung nach Ansprüche 1,
**dadurch gekennzeichnet, daß**
die Aufschiebe-Feder-Halteklammer zwei erste Nasen (6,7) aufweist.

10. Anordnung nach Anspruch 1 und 3,
**dadurch gekennzeichnet, daß**
die Aufschiebe-Feder-Halteklammer zwei erste Vorsprünge ( 8,9) aufweist.

## Claims

1. Arrangement with a push-on spring retaining clamp which is attachable to the edge area of a component with a top (1-0) and a bottom (1-U) side and an edge (1-E) and a U-shaped profile,
where
one leg of the push-on spring retaining clamp can be located on the top side (1-O) and the other leg on the bottom side (1-U), and the leg base (5) of the push-on spring retaining clamp on the edge (1-E) of the component,
where
one leg (3) (2) has at least one first tappet (6, 7) facing the component (1), which can hook into a locking position (R) of the component (1), and at least one projection (8, 9), and
where the other leg (4) is joined to the component (1) by a detachable connection to prevent the push-on spring retaining clamp (2) from separating from the component (1),
**characterised in that**
several adjacent locking positions (R) are formed on the component (1) and that the push-on spring retaining clamp (2) can be attached to the component (1) by means of its first tappet (6, 7) in one of these selectable locking positions.

2. Arrangement according to claim 1,
**characterised in**
**that** this other leg (4) has a second tappet (12) facing the component to connect the leg (4) detachably to the component, which can hook into a second recess (13) of the component (1) or
**that** the other leg (4') of the push-on spring retaining clamp (2') has an opening (14) in which a projection (15) of the component can fit.

3. Arrangement according to claim 1 or claim 2,
**characterised in that**
the projection (8, 9) can fit into a first recess (10, 11) of the component (1) to prevent the push-on spring retaining clamp (2) from lifting off the top side (1-O) of the component.

4. Arrangement according to one of the claims 1 or 2,
**characterised in that**
the push-on spring retaining clamp is connected with a first connection piece of a connecting arrangement (consisting of two connection pieces) for connecting two components, or is itself formed as such a first connection piece.

5. Arrangement according to claim 4,
**characterised in that**
the first connection piece (16) is a retaining leaf-spring arrangement of known type with the free ends (17, 18) of two leaf-spring arms facing one another at a distance (d) from one another for locking into at least one retaining groove of an imaginary retaining pin connectable to a second component.

6. Arrangement according to claim 5,
**characterised in that**
an open gap (S) is formed in a manner known between the ends (17, 18) of the leaf-spring arms, in which the imaginary retaining pin can be moved.

7. Arrangement according to claim 4,
**characterised in that**
the first component and the push-on spring retaining clamp (2'') have a slot (19) as opening for the imaginary retaining pin in which this can be moved.

8. Arrangement according to one of the claims 4 to 7,
**characterised in that**
the push-on spring retaining clamp (2'') and the retaining leaf-spring arrangement (16) are of one piece.

9. Arrangement according to claim 1,
**characterised in that**
the push-on spring retaining clamp has two first tappets (6, 7).

10. Arrangement according to claims 1 and 3,
**characterised in that**
the push-on spring retaining clamp has two first projections (8, 9).

## Revendications

1. Système avec une pince de retenue à ressort de forme approximative en U destinée à être montée par glissement sur une zone en bordure d'une pièce structurelle ayant une face supérieure (1-O), une face inférieure (1-U) et une arête (1-E),
une branche de la pince de retenue à ressort destinée à être montée par glissement étant adaptée pour être disposée sur la face supérieure (1-O) de la pièce structurelle,
l'autre branche, sur la face inférieure (1-U) de la pièce structurelle et la base (5) des branches de la pince de retenue à ressort destinée à être montée par glissement étant adaptée pour être disposée sur l'arête (1-E) de la pièce structurelle,
l'une des branches (3) (2) comportant au moins un premier ergot (6, 7) tourné vers la pièce structurelle (1) et adapté pour s'engager dans une position d'encliquetage (R) de la pièce structurelle (1) et au moins une saillie (8, 9) et
l'autre branche (4) étant solidarisée à la pièce structurelle (1) par une liaison amovible pour éviter que la pince de retenue à ressort (2) destinée à être montée par glissement ne se détache de la pièce structurelle (1),
**caractérisé en ce**
**que** plusieurs positions d'encliquetage (R) sont formées sur la pièce structurelle (1) et que la pince de retenue à ressort (2) destinée à être montée par glissement est adaptée pour être montée sur la pièce structurelle (1) par coopération de son premier ergot (6, 7) avec une position d'encliquetage choisie parmi la pluralité de positions.

2. Système selon la revendication 1,
**caractérisé en ce que**,
pour solidariser de façon amovible l'autre branche (4) à la pièce structurelle (1), cette branche (4) comporte un deuxième ergot (12) tourné vers la pièce structurelle et adapté pour coopérer avec un deuxième évidement (13) de la pièce structurelle (1)
ou
que l'autre branche (4') de la pince de retenue à ressort (2') destinée à être montée par glissement comporte une ouverture (14) destinée à recevoir une saillie (15) de la pièce structurelle.

3. Système selon la revendication 1 ou 2,
**caractérisé en ce que**
la saillie (8, 9) est adaptée pour être reçue dans un premier évidement (10, 11) de la pièce structurelle (1) afin d'éviter que la pince de retenue à ressort (2) destinée à être montée par glissement ne se soulève de la face supérieure (1-O) de la pièce structurelle.

4. Système selon l'une quelconque des revendications 1 ou 2,
**caractérisé en ce que**
la pince de retenue à ressort destinée à être montée par glissement est reliée à une première pièce de liaison d'un système de liaison (constitué par deux pièces de liaison) destiné à relier deux pièces structurelles ou est conformée comme une telle première pièce de liaison.

5. Système selon la revendication 4,
**caractérisé en ce que**
la première pièce de liaison (16) est un système de retenue à ressort à lame classique avec deux extrémités de la lame du ressort (17, 18) libres situées en regard avec un écartement (d) entre elles et destinées à s'engager dans au moins une encoche de retenue d'un boulon de retenue imaginaire destiné à être relié à une deuxième pièce structurelle.

6. Système selon la revendication 5,
**caractérisé en ce que**,
entre les extrémités (17, 18) de la lame du ressort, est formée de manière connue en soi une fente (S) ouverte dans laquelle le boulon de retenue imaginaire est mobile en coulissement.

7. Système selon la revendication 4,
**caractérisé en ce que**
la première pièce structurelle et la pince de retenue à ressort (2'') destinée à être montée par glissement comportent un trou oblong (19) pour le passage du boulon de retenue imaginaire qui est mobile en coulissement dans ce trou.

8. Système selon l'une quelconque des revendications 4 à 7,
**caractérisé en ce que**
la pince de retenue à ressort (2'') destinée à être montée par glissement et le système de retenue à ressort à lame (16) sont réalisés d'un seul tenant.

9. Système selon la revendication 1,
**caractérisé en ce que**
la pince de retenue à ressort destinée à être montée par glissement comporte deux premiers ergots (6, 7).

10. Système selon les revendications 1 et 3,
**caractérisé en ce que**
la pince de retenue à ressort destinée à être montée par glissement comporte deux premières saillies (8, 9).
